# FASCICULE DE BREVET EUROPEEN

(11) **EP 2 471 030 B1**
(45) Date de publication et mention de la délivrance du brevet: **12.04.2017**
(21) Numéro de dépôt: 10742850.0
(22) Date de dépôt: 17.08.2010
(51) Int. Cl.: G06K 19/077

(54) **DISPOSITIF A ANTENNE RELAIS, DISPOSITIF RADIOFREQUENCE ASSOCIE ET PROCEDE DE REALISATION**
VORRICHTUNG MIT EINER RELAIS-ANTENNE, ZUGEHÖRIGE RADIOFREQUENZVORRICHTUNG UND ZUGEHÖRIGES VERFAHREN
METHOD FOR THE REALIZATION OF A DEVICE COMPRISING A RADIOFREQUENCY CIRCUIT, OBTAINED DEVICE AND MODULE FOR CARRYING OUT THE METHOD

(30) Priorité: 28.08.2009 EP 09305795
(43) Date de publication de la demande: 04.07.2012
(73) Titulaire: Gemalto SA, 92190 Meudon (FR)
(72) Inventeur: BUYUKKALENDER, Arek, F-13013 Marseille (FR); SEBAN, Frédérick, F-13260 Cassis (FR); LAHOUI, Nizar, F-13400 Aubagne (FR)
(74) Mandataire: Milharo, Emilien
(86) Numéro de dépôt international: PCT/EP2010/061987
(87) Numéro de publication internationale: WO 2011/023604

(56) Documents cités:
- EP-A2- 1 837 798
- EP-B1- 1 031 939
- FR-A1- 2 919 409
- US-A1- 2008 308 641
- US-B1- 6 839 035

## Description

L'invention concerne le domaine des antennes relais et dispositifs comportant une antenne relais, ladite antenne relais comportant au moins une spire externe de relais reliée à au moins une capacité d'accord.

L'invention concerne également les dispositifs radiofréquences comportant ou étant associés à une antenne relais et un procédé de réalisation de ces dispositifs.

Plus particulièrement, l'invention concerne de tels dispositifs ci-dessus comportant en outre une fonction USB et/ou radiofréquence « RF » notamment selon la norme ISO 14443, ISO 15693, ou de type NFC (ISO18092, ISO21481, etc.)

Les dispositifs USB et RF trouvent application notamment pour le chargement de données par internet, notamment de droits d'accès, abonnement, à des services tels que transport, téléphonie, par une interface à contact et utilisation de ces données dans un mode radiofréquence en relation avec des bornes radiofréquences ou inversement.

Des dispositifs transpondeurs radiofréquences sont également connus parmi notamment des clés USB qui embarquent une fonction radiofréquence RF pour des applications de contrôle d'accès. Bien que décrit en relation avec l'USB, l'invention s'applique à tout dispositif de communication à contacts électriques notamment contacts linéaires tels que décrits dans les standards ou normes MMC, SD, Express card, ou ISO 7816 ou autre. Dans tout le document, par simplification, le terme USB signifie au sens de l'invention également tout autre standard ou protocole de communication différent d'USB.

La capacité à télé-alimenter la puce radiofréquence (RFID) à travers l'antenne va dépendre de la surface de l'antenne, il est donc souhaitable d'avoir un dispositif USB d'une grande surface, ce qui est en contradiction avec l'usage classique des dispositifs USB qui sont en général petits. Ces dispositifs USB auront donc une efficacité ou portée assez réduite de l'ordre de quelques centimètres, l'antenne ayant une surface de couplage au plus égale à la surface ou encombrement de la clé, généralement 2 à 3 cm2.

En outre, les composants et éléments installés à la surface du circuit imprimé tels que connecteurs composants électroniques, pistes etc., sont susceptibles de perturber la communication radiofréquence et de ne pas satisfaire les critères de L'ISO 14443-2.

Le demandeur a proposé une solution pour éviter ces perturbations et améliorer la portée dans une demande de brevet non publiée dans lequel une antenne radiofréquence est déportée du corps de la clé USB. La fabrication est toutefois plus complexe.

Une autre solution du demandeur non encore publiée pour dispositif NFC dans téléphone mobile a consisté à étendre une spire d'antenne extensible de transpondeur au delà de la surface du dispositif. Ces solutions ainsi que d'autres dans l'art antérieur ne sont pas satisfaisantes sur le plan pratique et/ou facilité de fabrication.

Les dispositifs de communication radiofréquence peuvent être de toute sorte et les transpondeurs radiofréquences comportent au moins une spire d'antenne reliée à un microcircuit radiofréquence. Parmi ces dispositifs, il y a notamment des cartes à puce sans contact, des passeports, des étiquettes électroniques, des jetons radiofréquences, des clés USB, des supports à mémoire de masse à contacts ayant une fonction radiofréquence supplémentaire, des téléphones portables. De préférence, les communications ont une portée de l'ordre de quelques centimètres voire à quelques mètres.

On connaît un brevet du demandeur FR2777141 (B1) illustré à la figure 1a, décrivant le principe d'un transpondeur à antenne relais. L'antenne relais pouvant être sensiblement autour de celle du transpondeur. Ce brevet vise plutôt des transpondeurs de type étiquette électronique dans lequel l'antenne relais comporte un condensateur sous forme de plaques gravées à la surface du substrat selon la même technologie que celle employée pour réaliser l'antenne. Les plaques sont disposées de part et d'autre du substrat. Il est évident que tout type de bobine est utilisable en fonction des différentes applications qui imposent la forme extérieure du transpondeur. De même, tout type de condensateur est utilisable. Les capacités utilisées pour l'antenne relais d'étiquettes électroniques sont estimées à quelques pico Farad. Les performances de ce transpondeur sont limitées par rapport à celles visées. Ce document ne vise pas du tout des moyens spécifiques optimisés destinés à satisfaire la norme ISO 14443-2.

Le brevet EP1031939 (B1) illustré à la figure 1b, décrit un perfectionnement de carte à puce sans contact sensé satisfaire l'ISO 14443-2 en principe. Il requiert deux antennes sur deux supports distincts, une antenne de transpondeur (8) sur un module M1 et une antenne relais réalisée en deux parties sur un substrat et qui comprend une antenne centrée 3 sur celle du module et connectée à une antenne périphérique. La capacité 12b est réalisée par des plaques de condensateur s'étendant sur une partie du substrat. Ce transpondeur est trop complexe et les antennes trop étendues. Il requiert deux supports pour les antennes, réalise l'antenne relais en deux parties (3, 4), une concentrique à l'antenne du transpondeur et une autre définissant une surface de couplage radiofréquence sensiblement égale à la surface de la carte.

Les documents EP 1 837 798 A2 et US 6 839 035 B1 présentent des systèmes à antennes relais pour des dispositifs radiofréquences, l'antenne relai étant reliée à une capacité d'accord. L'invention vise à résoudre les inconvénients précités.

Elle a pour premier objectif de proposer un dispositif transpondeur radiofréquence, notamment pour clé USB, qui soit plus performant en s'affranchissant des perturbations de composants électroniques / électriques et de préférence satisfaisant la norme ISO 14443-2.

Un autre objectif de l'invention est de proposer un transpondeur radiofréquence facile à fabriquer, dont l'antenne ne gêne pas du tout d'autres composants éventuels de dispositifs radiofréquences, destinés de préférence à satisfaire l'ISO.14443-2, principalement dans le domaine de la carte à puce, tels que passeport, carte à puce sans-contact, lecteur de carte à puce, etc.

Selon un premier mode de réalisation, un principe de l'invention consiste à recourir à une antenne relais spécifique destinée à être associée à un transpondeur radiofréquence adapté; Le condensateur d'antenne relais est de forte capacité et se présente sous forme de composant rapporté sur l'antenne ; il est notamment réalisé en circuit intégré. Le transpondeur peut ainsi être plus performant sans avoir les inconvénients du surdimensionnement d'une antenne de transpondeur ou d'antenne relais et en surmontant les problèmes de perturbations de composants. En particulier, l'invention prévoit de recourir à de fortes capacités de l'ordre de 35 - 80 pF ou supérieure à 35 pf en général

L'antenne relais conforme à l'invention a une dimension minimale optimisée et un agencement préféré conçu pour entourer l'antenne de transpondeur ; De préférence, l'antenne relais est disposée à distance de l'antenne de transpondeur, en évitant des chevauchements même à l'aplomb de l'antenne de transpondeur.

Selon un mode de réalisation préféré satisfaisant l'ISO 14443, l'antenne de transpondeur présente des dimensions supérieures ou égales à 13 x 10 mm (ou équivalent en surface) et l'antenne relais associée présente des dimensions supérieures ou égales à environ 20 x 28 mm (ou équivalent en surface).

Selon un autre aspect on réalise l'antenne de transpondeur et l'antenne relais sur un même substrat tout en prévoyant de rapporter une capacité sous forme de composant miniature.

A cet effet, l'invention a pour objet un dispositif comportant une antenne relais ladite antenne relais comportant au moins une spire externe (Sep) de relais reliée à au moins une capacité d'accord formée par un composant externe (C) rapporté et connecté sur l'antenne.

Il se distingue en ce que la capacité d'accord présente une valeur supérieure ou égale à environ 35 pF pour une fréquence d'accord à 13, 56 Mhz.

Selon d'autres caractéristiques de l'antenne relais :
- La capacité est sous forme de puce de circuit intégré ou d'un composant montée sur un module du type carte à puce à contact ou sans-contact ;
- L'antenne relais présente une surface à l'intérieur d'une spire externe de relais inférieure ou égale à environ 1160 mm2 correspondant respectivement environ à une moitié de carte à puce au format ID1 ;
- L'antenne relais comporte un nombre de spires supérieur ou égale à 4 ;
- L'antenne relais présente une surface à l'intérieur d'une spire externe de relais inférieure ou égale à environ 560 mm2 correspondant respectivement environ à un tiers de carte à puce au format ID1;
- L'antenne relais comporte une antenne ayant un nombre de spires inférieur ou égal à 15, voire 9 de préférence et en ce que la capacité a une valeur inférieure ou égale à environ 139 pF, voire 61 pF de préférence;

Au final, on préfère des valeurs de capacité supérieures à 35 pF notamment comprises de 35 à 139 pF ou de 35 à 61 pF.

L'invention a également pour objet un dispositif de communication radiofréquence comprenant :
- un microcircuit relié à une antenne de transpondeur, ladite antenne de transpondeur comportant une spire externe de transpondeur (Set) définissant à l'intérieur, une première surface de couplage électromagnétique (Sct) supérieure ou égale à environ 10 x 13 mm,
- une antenne relais associée (4c, 4d) conforme aux dispositions ci-dessus, l'antenne relais étant positionnée sensiblement autour de l'antenne de transpondeur de manière à avoir la surface de couplage de l'antenne de transpondeur (Sct) sensiblement en regard de celle (Scr) de l'antenne relais.

Selon d'autres caractéristiques préférées, du dispositif :
- L'antenne de transpondeur est comprise dans un rectangle d'environ 10 X 26 mm et l'antenne relais comprise dans un rectangle d'environ 20 x 28 mm;
- L'antenne de transpondeur et l'antenne relais comprennent respectivement de l'ordre de 4 à 10 et 4 à 9 tours ;
- L'antenne de transpondeur et l'antenne relais comprennent chacune une portion convergent jusqu'à une cavité (28) dans le support ou sur une zone d'enlèvement de matière sur le substrat.

L'invention a également pour objet un procédé de réalisation d'un dispositif de communication radiofréquence comprenant les étapes de :
- réalisation d'un microcircuit relié à une antenne de transpondeur (8c, 8d), ladite antenne de transpondeur comportant une spire externe de transpondeur (Set) définissant à l'intérieur, une première surface de couplage électromagnétique (Sct) supérieure ou égale à environ 10 x 13 mm;
- association d'une antenne relais réalisée selon les dispositions ci-dessus, l'antenne relais étant positionnée sensiblement autour de l'antenne de transpondeur de manière à avoir la surface de couplage de l'antenne de transpondeur (Sct) sensiblement en regard de celle (Scr) de l'antenne relais.

Selon d'autres caractéristiques du procédé :
- L'antenne de transpondeur et l'antenne relais sont réalisées sur un même substrat de manière à comprendre chacun une portion convergente jusqu'à une zone commune de connexion dans le substrat ;
- Le procédé comprend les étapes suivantes de réalisation des antennes sous forme d'un conducteur continu et de séparation des antennes que l'on sépare ensuite au niveau de ladite zone de connexion commune.

D'autres particularités et avantages de l'invention apparaîtront à la lecture de la description, faite à titre d'exemple non limitatif et en regard des dessins annexés sur lesquels :
- La figure 1a illustre selon l'art antérieur, un transpondeur radiofréquence, sous forme d'étiquette électronique;
- La figure 1b illustre selon l'art antérieur, une carte au format ID1 à double interface de communication contact et sans contact radiofréquence satisfaisant la norme ISO 14433 ;
- La figure 2 illustre une antenne relais conforme à l'invention ;
- Les figure 3a illustre une carte sans contact au format ID1 avec antenne relais selon un premier mode de réalisation de l'invention ;
- Les figures 3b et 3c illustrent des motifs d'antennes de transpondeur et d'antenne relais associées selon des dimensions ou configurations différentes conformes à l'invention ;
- La figure 4, illustre une portion de la figure 3a montrant le module portant un circuit radiofréquence et une capacité d'accord adaptée pour la mise en oeuvre de l'invention selon le mode ci-dessus ;
- La figure 4a illustre le module isolé de la figure précédente en vue de dessous ;
- La figure 4b illustre une vue en coupe A-A de la figure 4 ;
- Les figures 6 et 7 illustrent une clé USB ayant une fonction radiofréquence avec antenne relais selon un second mode de réalisation de l'invention ;
- La figure 8 illustre des étapes d'un procédé préféré de mise en oeuvre de l'invention ;
- La figure 9 illustre une étape de mise en oeuvre du procédé ci-dessus pour réaliser la carte de la figure 3.

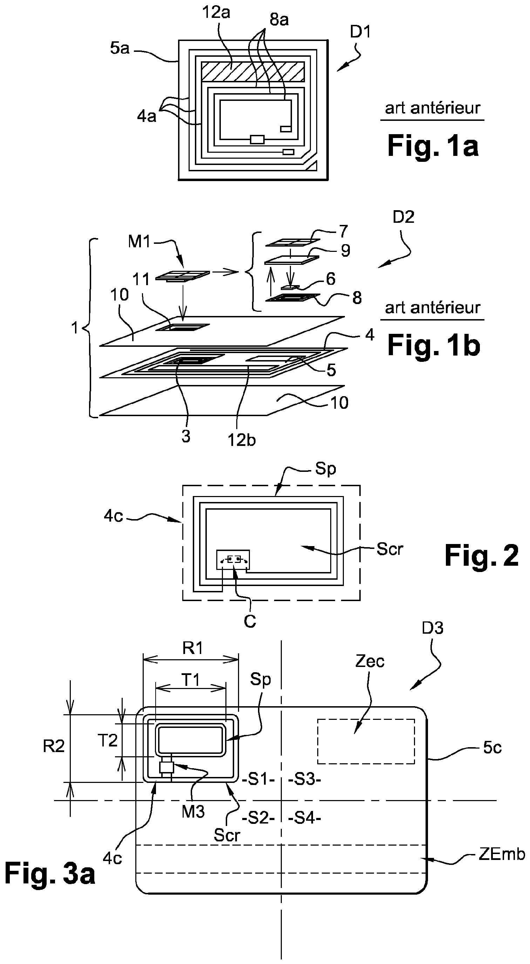

A la figure 1a, selon l'art antérieur, un transpondeur de type étiquette électronique D1 comporte une antenne relais 4a associée au transpondeur et reliée à un condensateur 12a sous forme de plaques gravées sur un substrat 5a. L'antenne relais est disposée autour de l'antenne 8a de transpondeur.

A la figure 1b, selon un autre art antérieur, une carte à puce sans contact D2 requiert deux antennes sur deux supports distincts : une antenne 8 de transpondeur sur un module M1 comportant des plages de contact 7, un support 9 encarté dans une cavité 11 d'une feuille 10. L'antenne 8 est reliée à un microcircuit radiofréquence 6 sur le module M1. La carte comprend une antenne relais (3, 4) réalisée en deux parties sur un substrat 5 et qui comprend une antenne 3 centrée sous l'antenne 8 du module M1 et connectée à une antenne périphérique 4. Le condensateur 12b est réalisé par des plaques de condensateur s'étendant sur une partie du substrat 5. Un tel condensateur sous une telle construction ne doit pas dépasser 10 Pico Farad environ.

A la figure 2, une antenne relais pour dispositif de communication radiofréquence (ou un dispositif 4c à antenne relais) comprend au moins une spire externe (Sp) de relais reliée à au moins une capacité d'accord (C). L'antenne relais peut être conditionnée de différentes manières connues notamment être supporté par une feuille support ou une coque d'appareil ou substrat d'un produit quelconque.

La capacité d'accord peut être incluse à un module classique à plages de contact de type carte à puce, encarté dans un corps de carte. La capacité peut être sous forme de puce de circuit intégré ou d'un composant, montée sur un module du type carte à puce à contact ou sans-contact. Le module peut éventuellement être un module à multiples usages et comprendre plusieurs contacts, au moins pour la capacité et/ou le cas échéant pour une puce de communication radiofréquence ou à communication à contacts tel que USB, ISO 7816, SD, MMC, etc.

On profite ainsi d'une seule opération d'encartage pour connecter à la fois la capacité et une puce fonctionnelle de communication en une seule étape.

Ainsi dans une application de dispositif à plusieurs interfaces de communication, le module héberge à la fois la capacité d'accord de l'antenne relais et peut héberger un autre circuit radiofréquence ou un circuit intégré de puce à contact notamment du type ISO 7816 ou autre type de microcircuit.

Les composants peuvent aussi être logés dans un corps de carte et connectés via un connecteur à l'une et/ou autre antenne.

Le condensateur est ici logé dans un module (comportant des plages de connexion avec ou sans substrat et avec un enrobage du condensateur et de ses connexions) connecté par thermo compression ou autre à l'antenne comme un module de carte sans-contact.

En alternative, la capacité pourrait être sous une forme nue par exemple comme une puce de circuit intégré retournée (technique flip-chip) et connectée avec colle conductrice ou équivalent.

Pour des raisons de fiabilité, le condensateur est de préférence connecté par soudure de fil, notamment thermo-compression, ultrasons. Le condensateur est monté de préférence sur un module adapté qui permet cette soudure, pour notamment des applications carte à puce, passeport, etc. à substrat souple.

Selon un mode préféré de réalisation de l'invention, la capacité d'accord est formée par un composant externe rapporté sur l'antenne. De tels composants sont notamment et de préférence conformes à ceux de la société Vishay qui a introduit le premier condensateur RF silicium pour des montages en surface en forme de boîtier 0603.

Le HPC0603A de haute précision et de haute performance présente des valeurs de SRF (Limites d'utilisation en fréquence) aussi élevées que 13 GHz dans une gamme étendue de capacités allant de 3,3 pF à 560 pF.

Le condensateur HPC0603A mesure 1,60 mm par 0,80 mm avec une épaisseur de 0,56 mm en étant conditionné avec un enrobage et de fines plages de contacts latérales sur le composant.

Les composants condensateurs se présentent avec enrobage sous forme de composant à puce montée en surface « CMS » (Chip mounted on surface). De tels condensateurs du type HPC permettent en général de réduire la taille du produit électronique RF simplifiant la conception et réduisant le nombre de composants sur le circuit imprimé. Ces composants de génération récente 2004 se différencient des capacités ou condensateurs électriques ou électroniques classiques de type beaucoup plus volumineux pour les valeurs de capacité visées.

La réduction du produit est réduite eu égard à la diminution de l'encombrement de la capacité notamment en épaisseur. Toutefois, en relation avec ces nouvelles capacités, il n'est pas décrit de réduire la surface de couplage des antennes de manière à satisfaire l'ISO. Au contraire, l'homme de l'art aurait tendance à augmenter la surface de couplage comme à la figure 2 pour augmenter les performances et satisfaire l'ISO ; Il pourrait aussi élargir la surface de couplage comme des propositions d'invention du demandeur.

On remarque que ces condensateurs, même s'ils existent depuis plus de 5 ans, ne sont pas présentés à l'homme de l'art des transpondeurs radiofréquences du domaine des cartes à puce avec l'avantage de s'affranchir des perturbations de composants électroniques/ électriques et de préférence satisfaisant la norme ISO 14443-2. Il n'est pas présenté non plus l'avantage d'une facilité de fabrication de dispositifs destinés de préférence à satisfaire l'ISO.14443-2 dans le domaine de la carte à puce, tels que passeport, carte à puce sans-contact, etc. Il n'est pas présenté non plus l'avantage d'une absence de gêne d'une antenne relais pour d'autres composants éventuels.

Ces condensateurs ne sont pas conditionnés pour être utilisés dans le domaine de la carte à puce. Ils s'adressent principalement au domaine électronique en général sous la forme de composant CMS. L'invention conditionne autrement ce composant sous forme de module pour carte à puce sans-contact.

Les antennes relais de l'art antérieur étaient associées à des condensateurs sous forme de plaque dans le domaine des cartes à puce et leur capacité ne dépassaient guère la valeur de 8 pF environ pour des surfaces d'environ 11 x 17 mm2.

En considérant la figure 1a, l'étiquette n'étant pas ISO 14443, le remplacement d'une capacité de valeur équivalente environ moins de 10 pF pour une capacité CMS équivalente remplirait la même fonction mais sans être ISO. En outre, le coût des étiquettes serait trop onéreux puisqu'il rajouterait un composant externe à connecter en plus de la puce radiofréquence.

Bien que de des valeurs de capacité élevées supérieures à 20, 60... soient préférées notamment pour la fréquence 13,56 Mhz, le cas échéant, l'invention n'exclut pas pour autant des capacités d'accord sous forme de composants externes (C) rapportés et connectés sur l'antenne de valeur supérieures ou égales à environ 2 pF dès l'instant ou il existe de la surface suffisante sur le substrat ou dispositif pour réaliser un nombre plus élevé de tours d'antenne relais, par exemple de l'ordre de 15 ou plus.

L'invention visant de préférence des antennes relais de petite surface, il est préféré d'avoir des capacités de fortes valeurs. Dans l'invention, les valeurs utilisées pour les applications visées, bien que non limitatives, s'étendent de 35 à 100 pF, de préférence supérieures à 35 pF pour des modes de réalisation compacts.

On verra par la suite que l'antenne de transpondeur a une surface de couplage supérieure à celle d'un module de type carte à puce à contact couvrant généralement de l'ordre de 13 x 10 mm2. Des essais réalisés n'ont pas permis d'avoir une surface de couplage de l'antenne de transpondeur inférieure à la surface du module ci-dessus avec un objectif d'antenne relais très compacte, inférieure à la moitié d'une surface de carte à puce ISO 7816 et pour des performances de transpondeur radiofréquence satisfaisant l'ISO 14443-2. Les résultats satisfaisants exposés ultérieurement ont été obtenus avec une surface de couplage supérieure à la surface d'un module.

Pour des questions de compacité, l'antenne relais est dimensionnée de manière à présenter une surface de couplage à l'intérieur d'une spire externe de relais Sp minimale d'environ 560 mm2 ; Ce qui peut représenter un rectangle de 28 x 20 mm. Dans une autre application remarquable, la surface minimale à l'intérieur d'une spire d'antenne de relais est égale à environ 868 mm2. Ce qui peut représente un rectangle de 28 x 31 mm.

A la figure 3a, à titre d'exemple, le dispositif de communication radiofréquence D3 est une carte à puce de surface S1 représentant sensiblement un quart de la surface d'une carte ID1 (85,6 x 54 mm2);

La surface S1 peut être découpée ultérieurement ou demeurer ainsi dans un corps de carte 5c au format normal ID1. L'avantage d'une telle carte est de libérer énormément de surface restante pour effectuer de l'embossage de caractère (carte bancaire) dans une zone « Zemb », hologramme, ou perforation ou disposer d'autres composants comme un module afficheur encarté dans une zone « Zec » sans les gêner.

Le dispositif D3 comprend un transpondeur comportant un microcircuit radiofréquence M3 relié à une antenne de transpondeur 8c ; L'antenne de transpondeur comporte une spire externe de transpondeur Sp définissant à l'intérieur, une première surface de couplage électromagnétique (Sc) minimale d'environ 200 mm2 ou 230 mm2, Dans l'exemple, les spires forment de l'ordre de 5 à 10 tours. L'antenne de transpondeur est comprise dans un rectangle d'environ T2 x T1 = 10 X 23 mm et l'antenne d'amplification comprise dans un rectangle d'environ R1 x R2 = 20 x 28 mm.

Le dispositif comprend également l'antenne relais comme précédemment ; l'antenne relais associée 4c est positionnée sensiblement autour de l'antenne de transpondeur de manière à avoir la surface de couplage de l'antenne de transpondeur sensiblement en regard de celle de l'antenne relais. Dans cet exemple de réalisation, l'antenne de transpondeur et l'antenne relais comprennent chacune une portion convergent jusqu'à une cavité dans le substrat, décrite ultérieurement ou sur une zone de connexion aux puces ou à un ou deux modules sur le substrat.

La zone peut être aussi une zone de sectionnement ou d'enlèvement de matière sur le substrat et/ou de spire et de matière du substrat. La zone peut être aussi une zone de réception d'un ou plusieurs composant(s) ou module(s) M3.

Ainsi, une combinaison du transpondeur et de l'antenne relais conforme notamment à cet exemple permet de réaliser un dispositif d'encombrement le plus réduit possible tout en étant conforme à l'ISO 14443. Le dispositif comprenant le transpondeur global résultant (c.-à-d. avec l'antenne relais associé), présente une surface inférieure à un quart d'une surface de carte à puce au format ID1.

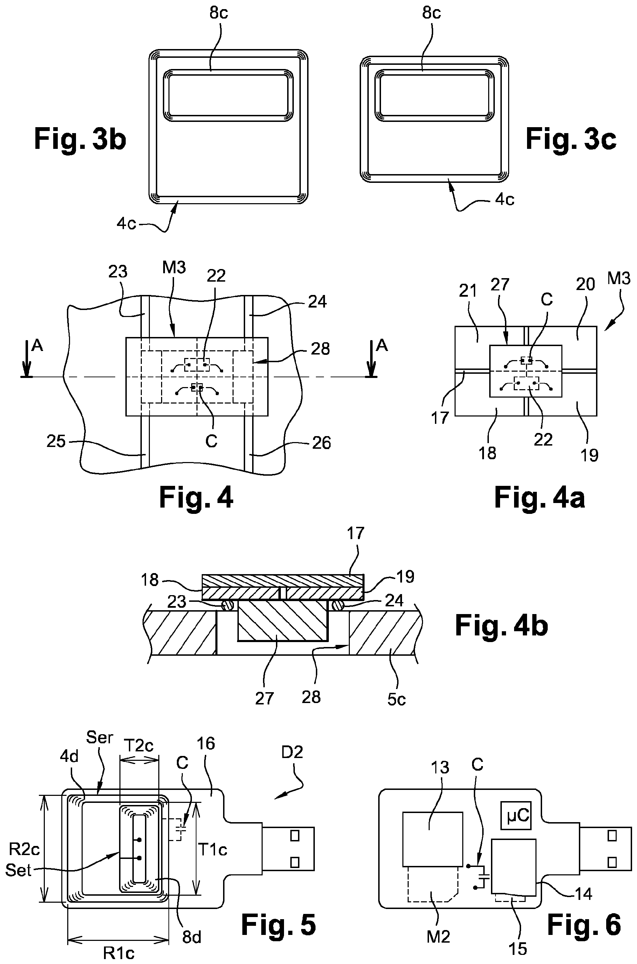

Les figures 3b et 3c illustrent des motifs d'antennes de transpondeur et d'antenne relais associées selon des dimensions ou configurations différentes conformes à l'invention ; Ces motifs aboutissent à des résultats exposés ultérieurement.

Sur les figures 4 à 5 (extraites de la figure 3a), le module M3 comporte selon un mode de réalisation un substrat 17 portant des plages conductrices ou bien uniquement des plages conductrices (grille métallique). Un microcircuit radiofréquence 22 est connecté aux plages 18 et 19, elles-mêmes reliées par soudure aux extrémités ou aux brins terminaux 23 et 24 de l'antenne 4c de transpondeur ; Le module comporte l'enrobage dans une cavité du substrat 5c.

Selon une caractéristique de l'invention, le module comporte aussi un composant (C) formant capacité et étant relié aux plages 21 et 20. Les plages sont elles-mêmes soudées aux extrémités 25 et 26 de l'antenne relais 4c.

Comme la capacité est prévue pour des domaines d'application de l'industrie électronique mais pas celui de la carte à puce. Il est nécessaire de conditionner la capacité sous forme de module (type module de carte sans-contact RF) pour permettre son application dans l'industrie de la carte à puce RF.

La capacité est notamment du type HPC décrit supra sous forme de composant CMS. Le composant de 56 µm d'épaisseur et 160 µm de long et 80 µm de large est par exemple fixé sur une grille de 10 µm d'épaisseur avec les plages de contact latérales vers le haut ; puis une connexion notamment en fil soudé (wire bonding) est réalisée entre les plages du composant et les plages du module ; puis, les connexions sont enrobées d'une résine pour former un module d'environ 600 à 630 µm d'épaisseur.

Le composant HPC peut alors être utilisé sous cette forme reconditionnée dans l'industrie de la carte à puce comme un module classique contact ou sans contact. En particulier, il devient possible de connecter l'antenne en fil conducteur incrusté ou non. Les fils conducteur d'antenne ayant un diamètre environ de 112 µm, il aurait été impossible de les connecter directement sur des plages d'environ 30 µm de large et 80 µm de long.

A la figure 6, le dispositif radiofréquence est sous la forme d'une clé USB. Il comprend comme précédemment une antenne de transpondeur 8d et une antenne relais 4d. L'antenne relais de cet exemple est disposée de manière à entourer l'antenne de transpondeur 8d sur le même support 16 ; L'antenne de transpondeur 8d est comprise dans un rectangle d'environ T2C x T1 C = 10 x 26 mm2 et l'antenne relais comprise dans un rectangle d'environ R1c x R2c = 28 x 31 mm2. Elle définit une surface de couplage à l'intérieur d'une spire externe de relais (Ser).

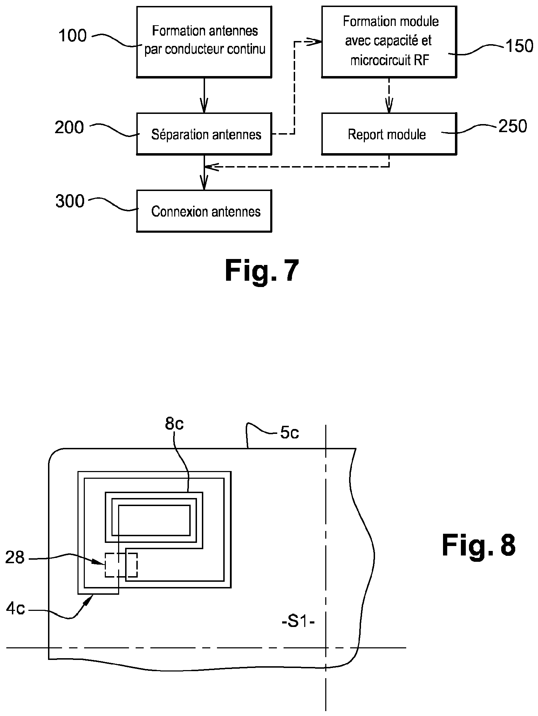

Les performances de ce transpondeur satisfont l'ISO 14443 malgré le peu de surface disponible et malgré la présence d'éléments métalliques / électriques / électroniques perturbateurs (fig. 7) tels qu'un connecteur 13 de mini-carte à puce M2 au format mini SIM, une mini carte M2, un connecteur 14 pour carte à mémoire 15 et carte à mémoire 15, microcontrôleur µc.

Les antennes sont réalisées sur un circuit imprimé 16 par technique classique de gravure de pistes conductrices. Certaines pistes sont sur une face opposée aux antennes. La capacité est également sous forme de composant CMS ou du type HPC visé supra. Elle est directement soudée sur le PCB sans autre conditionnement supplémentaire dans la mesure où les antennes et pistes sont gravées.

Selon une caractéristique, l'antenne de transpondeur et l'antenne relais comprennent respectivement de l'ordre de 6 à 8 et 8 à 10 tours. Dans l'exemple, elles comprennent respectivement 7 et 9 spires.

Selon une autre caractéristique, l'antenne de transpondeur et l'antenne relais sont réalisées sur un même substrat pour des raisons notamment de simplicité et de coût. Les antennes peuvent toutefois résider sur des substrats distincts notamment sur une coque de dispositif mais de préférence toujours à proximité (quelques mm voir cm)

On va maintenant décrire un exemple de mise en oeuvre d'un procédé de réalisation d'un dispositif de communication radiofréquence, conforme à l'ISO 14443, comportant une antenne de transpondeur reliée à un microcircuit et d'une surface inférieure à celle d'une carte au format ID1. Le procédé général de l'invention comprend les étapes ci-après.
- Réalisation de l'antenne de transpondeur avec une spire externe définissant à l'intérieur de la spire, une première surface de couplage électromagnétique (S2) ; elle est de préférence supérieure ou égale à environ 200 mm2 voire 230 mm2; On associe une antenne relais que l'on dispose à proximité et sensiblement autour de l'antenne de transpondeur, l'antenne relais comportant au moins une spire externe de relais et une capacité d'accord.
- Formation ensuite la capacité sous forme d'un composant ou module externe rapporté sur l'antenne,
- Dimensionnement de l'antenne relais de manière à présenter une seconde surface de couplage à l'intérieur d'une spire externe de relais, comprise environ entre 560 mm2 et 1056 mm2.

De préférence, le procédé comporte des étapes avantageuses sur le plan pratique, telles qu'illustrées à la figure 8 et en relation avec la figure 9;

A l'étape 100, on forme ou réalise l'antenne de transpondeur et l'antenne relais sur un même substrat 5c de manière à comprendre chacun une portion convergente jusqu'à une zone commune de connexion 28 (en pointillé) dans le substrat. De préférence, on utilise un conducteur continu pour former les deux antennes, notamment par gravure ou fil conducteur par ultrasons.

A l'étape 200, on sépare les deux antennes notamment par usinage d'une cavité et/ou sectionnement d'au moins une spire d'antenne dans une zone de connexion commune aux modules. Le cas échéant, la cavité peut déjà être présente avec report du fil d'antenne. Le module peut aussi être présent dans la cavité ou sur le substrat avant réalisation de l'antenne.

A l'étape 300, on procède à la connexion des composants aux deux antennes comme illustré aux figures 4 et 5.

Des étapes 150 et 250 supplémentaires, peuvent être comprises éventuellement. A l'étape 150, le module M3 de la figure 4 est formé avec au moins la capacité. On joint de préférence le circuit radiofréquence RF enrobé de résine 27 ; Toutefois, ce circuit RF aurait pu être connecté distinctement.

A l'étape 250, le module M3, avec au moins quatre plages de contact et comportant au moins le microcircuit et au moins ladite capacité, est reporté préalablement à l'étape de connexion de l'étape 300.

Une étude des résultats de mesures sur des configurations choisies ont permis à l'inventeur de faire des déductions ci-après sur une antenne relais à 13,56 MHz. L'étude montre notamment que pour qu'un relais permette de rendre un transpondeur conforme à l'ISO 14443-2, il doit de préférence tenir compte de notamment des règles ci-après permettant un couplage optimal entre les 2 antennes. La taille du transpondeur doit être inférieure à celle du relais et les antennes agencées de manière à ce qu'il y ait une distance minimale d'environ 200µm entre le dernier fil externe du transpondeur et le dernier fil intérieur du relais (autrement dit qu'ils ne se chevauchent pas même à l'aplomb ou en projection).

Le nombre respectif de spires de chaque antenne est également important comme expliqué ci-après. Par exemple, un couple relais/transpondeur agencé selon l'invention mais qui n'était pas ISO14443-2 et de construction similaire au transpondeur de la figure 3 est devenu ISO après modification. Il avait les caractéristiques suivantes :
- Antenne transpondeur : 23x10 mm / 7tours / 0,200 µm inter-spires
- Antenne relais 13,56 MHz : 28x20 mm / 7 tours / 0,200µm
- Valeur de champs minimum = 1,4A/m ; Bande supérieure latérale (USB) = 20,8 mV / Bande inférieure (LSB) =16,9 mV ;(Rappel ISO : min=18,4mV avec 1,5A/m) ;

Après augmentation de deux spires de l'antenne relais sans rien changer par ailleurs (Antenne relais 13,56 MHz= 28x20 mm / 9 tours / 0,200 µm), on obtient : Valeur de champs minimum= 1,28 A/m ; Bande la latérale supérieure (USB) =22,3 mV / Bande latérale inférieure (LSB) =19,5 mV. Il a donc été constaté qu'en ajoutant simplement 2 spires à l'antenne relais, on a augmenté les performances du couple radiofréquence de plus de 10% et réaliser un motif d'antenne conforme à l'ISO 14443-2 d'une taille de 28x20 mm, soit de l'ordre d'un tiers d'une carte au format ID1 54 X 86 mm.

L'invention permet de définir quelle doit être la taille de l'antenne relais la plus petite possible conforme à l'ISO 14443-2 ; Plus celle-ci est petite, plus il faut de spires et augmenter la valeur de la capacité pour que l'antenne relais puisse résonner à 13,56 MHz ; En outre, il faut prévoir de l'espace restant à l'intérieur de l'antenne relais pour pouvoir recevoir le transpondeur.

Pour rappel, un des objectif de l'invention était notamment de pouvoir réaliser un transpondeur ISO 14443-2 inférieur à environ un 1/3 voire 1/4 ou 1/2 de la surface totale d'une carte à puce D3 de 54 X 86 mm2. Cet objectif a été atteint avec des valeurs ci-après :
- Antenne relais à 13,56MHz, dimensions de 28x20mm, espace inter-spires (pitch) 200 µm ; 9 tours et C=28pF ;
- Transpondeur avec puce Infineon IFX SLE66CLX600PEM et antenne de dimensions 10 x 23 mm ; espace inter-spires (pitch) 200µm, 7 tours.

Un tableau de valeurs obtenues de couple transpondeur / relais permettant de satisfaire la norme ISO 14443-2 est présenté ci-après. La norme ISO 14443-2 prévoit des valeurs de rétro-modulation des transpondeurs compatibles supérieures ou égales à 18,4 mV pour un champ H de 1,5 A/m sur les deux bandes latérales de réponse du transpondeur. D'autre part, l'ensemble relais / transpondeur doit fonctionner dans un champ inférieur ou égal à 1, 5 A/m.

**Tableau 1**

| | | | ISO 14443-2 résultats avec puce SLE66CLX800PE (Infineon) | | | | | | | |
|---|---|---|---|---|---|---|---|---|---|---|
| Relais (13,56MHz) | | | Hmin (A/m) Transpondeur (21 MHz) en 26x10mm | | | | L/ M : Charge de Retro-Modulation (mV) avec 1,5 A/m avec un transpondeur en 26 x 10mm | | | |
| Surface (mm) | Tours | C (pF) | 4 tours; C:56,6pF | 5 tours; C:34pF | 6 tours; C:18,5pF | 7 tours; C:13pF | 4 tours; C:56,6pF | 5 tours; C:34pF | 6 tours; C:18,5pF | 7 tours; C:3pF |
| 31x28 | 4 | 100 | 3,25 | 2,43 | 2,15 | 1,62 | - | - | - | - |
| 31x28 | 5 | 65 | 1,7 | 1,66 | 1,44 | 1,35 | - | - | 21,4 (LSB seul) | 23,75 |
| 31x28 | 6 | 49 | 1,9 | 1,46 | 1,35 | 1,23 | - | 22 (LSB seul) | 25,2 | 24,8 |
| 31x28 | 7 | 34,5 | 1,5 | 1,4 | 1,2 | 1,15 | 17,5 | 27,6 | 25,3 | 25,5 |
| 28x20 | 4 | 128 | 2,4 | 2,2 | 1,66 | 1,7 | - | - | - | - |
| 28x20 | 5 | 82 | 2,04 | 1,84 | 1,47 | 1,5 | - | - | 16,45 (LSB seul) | 16 (LSB seul) |
| 28x20 | 6 | 61 | 2,41 | 2,17 | 1,87 | 1,8 | - | - | - | - |
| 28x20 | 7 | 46,6 | 1,78 | 1,87 | 1,9 | 1,75 | - | - | - | - |
| 28x16 | 4 | 139 | 3,22 | 2,74 | 2,47 | 2,43 | - | - | - | - |
| 28x16 | 5 | 96,5 | 3,2 | 2,88 | 2,6 | 2,33 | - | - | - | - |
| 28x16 | 6 | 78,4 | 3,27 | 2,88 | 2,37 | 2,96 | - | - | - | - |
| 28x16 | 7 | 53,7 | 2,4 | 2,1 | 1,64 | 2,13 | - | - | - | - |

**Tableau 2**

| Surface transpondeur modifié en 23 x 10 mm et 7 tours | | | | |
|---|---|---|---|---|
| Dimensions relais (mm) | Tours relais | capacité (pF) | Hmin | L/M |
| 28x20 | 6 | 61 | 1,5 | 20 / 14 |
| 28x20 | 7 | 46,6 | 1,4 | 20,8 / 16,9 |
| 28x20 | 8 | 35 | 1,36 | 21,8 / 15,8 |
| 28x20 | 9 | 28 | 1,28 | 22,3 / 19,5 |

De ces tableaux, il a été déduit que les limites de surface de l'antenne relais conforme à L'ISO ont été sensiblement avoisinées avec des dimensions de 20 x 28 mm.

On observe de ces tableaux 1 et 2 que les antennes doivent être sensiblement l'une à l'intérieur de l'autre sans chevauchement. Une distance de 200 µm environ minimale a dû être respectée entre les deux antennes. Au tableau 1, une valeur dégradée de 1, 75 Hmin (au lieu de 1, 5) a été observée pour une antenne relais 28 x 27 et 7 tours pour une surface de transpondeur en 26 x 10. Le septième tour du transpondeur chevauche dans ce cas la spire interne de l'antenne relais. Au contraire sur le tableau 2, une bonne valeur de 1,4 pour Hmin a été obtenue pour 7 tours mais une surface de transpondeur plus petite de 23 x 10 qui permet d'éviter un chevauchement des antennes.

On remarque dans ce tableau que les puces RF du transpondeur se voient associées à des capacités pour des raisons pratiques ou des tests d'un plan d'expérimentation poussé. Il est toutefois possible de s'affranchir de ces capacités ajoutées en externe notamment s'il est possible de modifier le motif d'antenne à l'avance comme le tableau ci-dessous. Cela se traduit notamment par un ajout d'une spire et le cas échéant d'une diminution de l'espace inter-spires.

Voici des équivalences sans capacité des antennes incrustées par rapport à des antennes de transpondeur du plan d'expérimentation.

| Antennes de transpondeur en fil incrusté du plan d'expérience | Equivalent en fil incrusté sans capacité ajoutée. |
|---|---|
| 26x10 mm / 7 Tours / Pitch = 200µm | 26x10 mm / 8 Tours / Pitch =150µm |
| 23x10 mm / 9 Tours / Pitch = 200µm | 23x10 mm / 10 Tours / Pitch =200µm |

D'autres résultats ont été obtenus en relation avec les constructions des figures 3b et 3c qui illustrent schématiquement une construction des antennes transpondeurs et relais similaire ou identique à celle de la figure 3. Il a été obtenu les fourchettes suivantes pour des caractéristiques de l'antenne relais de manière à rester conforme à l'ISO 14443-2:
Figure 3b : Dimensions antenne relais: 31x28 mm ; Nombre de tours= 7 ; Pitch = 0,200µm ; C = 34,5 pF
   - Dimensions externes ≥ à 20x28mm (max visé= 36,5 x 23mm, soit 1 / 4 de carte ID1 en retirant 2 mm de tolérances sur le contour pour la découpe au format)
   - Nombre de tours ≥ 5 ; max=15
   - Espace inter-spires (Pitch) mini ≥ 150µm (centre à centre);
   - Diamètre fil ≥ 50 µm (pas de limitation en max)
   - L ≥ 2 µH; max=22µH
   - R ≥ 2 Ohms ; max=13 Ohms
   - C ≥ 2 pF (dans le cas d'une antenne 12 tours, par exemple et de taille maxi ; pas de max avec cette technique.
Figure 3c : Dimensions antenne relais : 20x28 mm ; Nombre de tours= 9 ; Pitch = 0,200µm ; C = 27 pF
   - Dimensions externes ≥ à 31x28 mm
   - Nombre de tours ≥ à 5 ; max 15
   - Pitch min ≥ à 150µm (centre à centre)
   - Diam fil ≥ à 50µm (pas de limite max)
   - L ≥à 1µH ; max 22µH
   - R ≥ à 2 Ohms ; max=13Ohms
   - C ≥ à 2pF

La tolérance des valeurs dans la présente description pour le terme « environ » est plus ou moins 5 %, voire 10 %.

## Revendications

1. Dispositif de communication radiofréquence comprenant une antenne relais d'amplification associée (4c, 4d), ladite antenne relais comportant au moins une spire externe (Sp, Ser) de relais reliée à au moins une capacité d'accord, la capacité d'accord étant formée par un composant externe (C) rapporté et connecté sur l'antenne,
- un microcircuit (22) relié à une antenne de transpondeur (8c, 8d), ladite antenne de transpondeur comportant une spire externe de transpondeur (Set) définissant à l'intérieur, une première surface de couplage électromagnétique (Sct) supérieure ou égale à environ 10 x 13 mm ,
- l'antenne relais étant positionnée sensiblement autour de l'antenne de transpondeur de manière à avoir la surface de couplage de l'antenne de transpondeur (Sct) sensiblement en regard de celle (Scr) de l'antenne relais,
**caractérisé en ce que** la capacité d'accord présente une valeur supérieure à 35 pF pour une fréquence d'accord à 13, 56 Mhz,
et **en ce que** l'antenne relais présente une surface à l'intérieur d'une spire externe de relais inférieure ou égale à environ 1160 mm2 correspondant respectivement environ à une moitié de carte à puce au format ID1.

2. Dispositif selon la revendication précédente, **caractérisé en ce que** la capacité est sous forme de puce de circuit intégré ou d'un composant montée sur un module du type carte à puce à contact ou sans-contact.

3. Dispositif selon l'une des revendications précédentes, **caractérisé en ce que** l'antenne relais comporte un nombre de spires supérieur ou égale à 4.

4. Dispositif selon l'une des revendications précédentes, **caractérisé en ce que** l'antenne relais présente une surface à l'intérieur d'une spire externe de relais inférieure ou égale à environ 560 mm2 correspondant respectivement environ à un tiers de carte à puce au format ID1.

5. Dispositif selon la revendication précédente, **caractérisé en ce qu'**il comporte une antenne relais ayant un nombre de spires inférieur ou égal à 9 et **en ce que** la capacité a une valeur inférieure ou égale à environ 139 pF.

6. Dispositif selon la revendication précédente, **caractérisé en ce que** l'antenne de transpondeur (8c, 8d) est comprise dans un rectangle d'environ 10 X 26 mm et l'antenne relais (4c, 4d) comprise dans un rectangle d'environ 20 x 28 mm.

7. Dispositif selon la revendication précédente, **caractérisé en ce que** l'antenne de transpondeur et l'antenne relais comprennent respectivement de l'ordre de 4 à 10 et 4 à 9 tours.

8. Dispositif selon l'une quelconque des revendications précédentes, **caractérisé en ce qu'**il constitue une clé USB.

9. Dispositif selon l'une quelconque des revendications précédentes, **caractérisé en ce que** l'antenne de transpondeur et l'antenne relais comprennent chacune une portion convergente jusqu'à une cavité (28) dans le support ou sur une zone d'enlèvement de matière sur le substrat.

10. Procédé de réalisation d'un dispositif de communication radiofréquence conforme à l'une quelconque des revendications précédentes,
**caractérisé en ce que** l'antenne de transpondeur et l'antenne relais sont réalisées sur un même substrat de manière à comprendre chacun une portion convergente jusqu'à une zone commune (28) de connexion dans le substrat.

11. Procédé selon la revendication précédente, **caractérisé en ce qu'**il comprend les étapes suivantes :
- réalisation des antennes sous forme d'un conducteur continu,
- séparation des antennes que l'on sépare ensuite au niveau de ladite zone de connexion commune.

## Patentansprüche

1. Funkfrequenz-Kommunikationsgerät mit zugehöriger Relaisantenne (4c, 4d), wobei die Relaisantenne mindestens eine äußere Relaiswindung (Sp, Ser) umfasst, die mit mindestens einer Abstimmkapazität verbunden ist, und die Abstimmkapazität durch ein externes Bauteil (C) gebildet wird, das an die Antenne angesteckt und daran angeschlossen wird,
- eine Mikroschaltung (22), die mit einer Transponderantenne (8c, 8d) verbunden ist, wobei besagte Transponderantenne eine äußere Transponderwicklung (Set) umfasst, welche innen eine erste elektromagnetische Kopplungsfläche (Sct) größer /gleich ungefähr 10 x 13 mm abgrenzt,
- wobei die Relaisantenne im Wesentlichen um die Tranponderantenne herum angeordnet ist, so dass die Kopplungsfläche der Transponderantenne (Sct) im Wesentlichen gegenüber der Kopplungsfläche (Scr) der Relaisantenne steht,
**dadurch gekennzeichnet, dass** die Abstimmkapazität bei einer Abstimmfrequenz von 13,56 Mhz einen Wert größer 35 pF aufweist,
und dadurch, dass die Relaisantenne im Innern einer äußeren Relaiswindung eine Fläche kleiner/gleich 1160mm2 aufweist, die jeweils der Hälfte einer Chipkarte im Format ID1 entspricht.

2. Vorrichtung nach dem vorhergehenden Anspruch, **dadurch gekennzeichnet, dass** die Kapazität in Form eines integrierten Schaltungschips oder eines Bauteils auf ein Modul vom Typ einer kontaktbasierten oder kontaktlosen Chipkarte montiert ist.

3. Vorrichtung nach den vorhergehenden Ansprüchen, **dadurch gekennzeichnet, dass** die Relaisantenne eine Anzahl von Windungen größer/gleich 4 umfasst.

4. Vorrichtung nach einem der vorhergehenden Ansprüche, **dadurch gekennzeichnet, dass** die Relaisantenne im Innern einer äußeren Relaiswindung eine Fläche kleiner/gleich ungefähr 560 mm2 hat, die jeweils ungefähr einem Drittel einer Chipkarte im Format ID1 entspricht.

5. Vorrichtung nach dem vorhergehenden Anspruch, **dadurch gekennzeichnet, dass** sie eine Relaisantenne mit einer Anzahl von Windungen kleiner/gleich 9 umfasst und dass die Kapazität einen Wert kleiner/gleich ungefähr 139 pF hat.

6. Vorrichtung nach dem vorhergehenden Anspruch, **dadurch gekennzeichnet, dass** die Transponderantenne (8c, 8d) in einem ungefähr 10 x 26 mm großen Rechteck und die Relaisantenne (4c, 4d) in einem ungefähr 20 x 28 mm großen Rechteck enthalten ist.

7. Vorrichtung nach dem vorhergehenden Anspruch, **dadurch gekennzeichnet, dass** die Transponderantenne und die Relaisantenne jeweils 4 bis 10 und 4 bis 9 Umwicklungen umfassen.

8. Vorrichtung nach einem der vorhergehenden Ansprüche, **dadurch gekennzeichnet, dass** sie einen USB-Stick bildet.

9. Vorrichtung nach einem der vorhergehenden Ansprüche, **dadurch gekennzeichnet, dass** die Transponderantenne und die Relaisantenne jeweils einen Abschnitt aufweisen, der bis zu einem Hohlraum (28) in der Halterung oder auf einem Bereich der Materialabtragung auf dem Substrat konvergiert.

10. Verfahren zur Herstellung einer Funkfrequenz-Kommunikationseinrichtung gemäß einem der vorhergehenden Ansprüche, **dadurch gekennzeichnet, dass** die Transponderantenne und die Relaisantenne auf ein und demselben Substrat hergestellt werden, so dass jede einen Abschnitt enthält, der bis zu einem gemeinsamem Verbindungsbereich (28) im Substrat konvergiert.

11. Verfahren nach dem vorhergehenden Anspruch, **dadurch gekennzeichnet, dass** es folgende Schritte umfasst:
- die Herstellung der Antennen in Form eines kontinuierlichen Leiters
- die Trennung der Antennen, die man anschließend in Höhe besagten gemeinsamen Verbindungsbereichs trennt.

## Claims

1. A radiofrequency communication device comprising an associated amplifying relay antenna (4c, 4d), with said relay antenna comprising at least one outer relay turn (Sp, Ser) connected to at least one tuning capacitor, with the tuning capacitor consisting of an outer component (C) mounted on and connected to the antenna,
- a microcircuit (22) connected to a transponder antenna (8c, 8d), with said transponder antenna comprising an outer transponder turn (Set) defining inside a first electromagnetic coupling surface (Sct) greater than or equal to 10x13mm,
- with the relay antenna being positioned substantially around the transponder antenna so that the coupling surface of the transponder antenna (Sct) is substantially opposite that (Scr) of the relay antenna,
**characterized in that** the tuning capacitor has a value greater than 35pF for a tuning frequency of 13.56Mhz,
and **in that** the relay antenna has a surface inside a relay outer turn smaller than or equal to 1,160mm², which corresponds to approximately half a smart card in ID1 format, respectively.

2. A device according to the preceding claim, **characterized in that** the capacitor is an integrated circuit chip or a component mounted on a module of the contact or contactless smart card type.

3. A device according to one of the preceding claims, **characterized in that** the relay antenna has a number of turns greater than or equal to 4.

4. A device according to one of the preceding claims, **characterized in that** the relay antenna has a surface within an outer relay turn smaller than or equal to about 560mm² which approximately corresponds to one third of a smart card in ID1 format respectively.

5. A device according to the preceding claim, **characterized in that** it comprises a relay antenna having a number of turns smaller than or equal to 9 and **in that** the capacitor has a value smaller than or equal to about 139pF.

6. A device according to the preceding claim, **characterized in that** the transponder antenna (8c, 8d) is inscribed within a rectangle of approximately 10x26mm and the relay antenna (4c, 4d) is inscribed within a rectangle of approximately 20x28mm.

7. A device according to the preceding claim, **characterized in that** the transponder antenna and the relay antenna each comprise from 4 to 10 and from 4 to 9 turns respectively.

8. A device according to any one of the preceding claims, **characterized in that** it is a USB flash drive.

9. A device according to any one of the preceding claims, **characterized in that** the transponder antenna and the relay antenna each comprise a portion converging to a cavity (28) in the support or in a zone of material removal on the substrate.

10. A method for making a radio frequency communication device according to any one of the preceding claims,
**characterized in that** the transponder antenna and the relay antenna are formed on the same substrate so as to each include a portion converging to a common zone (28) of connection to the substrate.

11. A method according the preceding claim, **characterized in that** it comprises the following steps:
- production of the antennas as a continuous conductor,
- separation of the antennas which are then separated at said common connection area.
